(19) **Europäisches Patentamt**
**European Patent Office**
**Office européen des brevets**

(11) **EP 4 345 974 A1**

(12) **EUROPEAN PATENT APPLICATION**
published in accordance with Art. 153(4) EPC

(43) Date of publication:
**03.04.2024 Bulletin 2024/14**

(21) Application number: **22881353.1**

(22) Date of filing: **12.10.2022**

(51) International Patent Classification (IPC):
*H01M 10/058* $^{(2010.01)}$    *H01M 4/38* $^{(2006.01)}$
*H01M 10/052* $^{(2010.01)}$    *H01M 50/105* $^{(2021.01)}$
*H01M 4/02* $^{(2006.01)}$

(52) Cooperative Patent Classification (CPC):
**H01M 4/02; H01M 4/36; H01M 4/38; H01M 4/62;**
**H01M 10/052; H01M 10/058; H01M 10/42;**
**H01M 50/105; H01M 50/618;** Y02E 60/10;
Y02P 70/50

(86) International application number:
**PCT/KR2022/015436**

(87) International publication number:
**WO 2023/063726 (20.04.2023 Gazette 2023/16)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.10.2021 KR 20210134880**

(71) Applicant: **LG Energy Solution, Ltd.**
**Seoul 07335 (KR)**

(72) Inventors:
• **KIM, Min-Su**
**Daejeon 34122 (KR)**
• **HONG, Kyung-Sik**
**Daejeon 34122 (KR)**
• **SHIN, Dong-Seok**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **LITHIUM SECONDARY BATTERY AND MANUFACTURING METHOD THEREFOR**

(57) Provided is a lithium secondary battery obtained through a step of injecting an electrolyte under an environment in which the battery is pressurized. In this manner, a small amount of electrolyte can be supported in a high-density electrode having a low porosity, and thus the battery can provide improved performance and life characteristics.

FIG. 3

EP 4 345 974 A1

**Description**

TECHNICAL FIELD

The present application claims priority to Korean Patent Application No. 10-2021-0134880 filed on October 12, 2021 in the Republic of Korea. The present disclosure relates to a lithium secondary battery. Particularly, the present disclosure relates to a lithium secondary battery in which volumetric swelling is minimized, a system for manufacturing a lithium secondary battery in which volumetric swelling is minimized, and a method for manufacturing a lithium secondary battery in which volumetric swelling is minimized.

BACKGROUND ART

When any document, act, or knowledge is referred to or discussed herein, such reference or discussion is not to be acknowledged that such document, act, knowledge or combination of two or more thereof was publicly made, available, publicly notified, present as a part of general knowledge, constitutes prior art in accordance with applicable legal regulations, or is related to attempts to solve problems related to the present disclosure, on the date of priority.

Demand for portable electronic products, such as laptop computers, video cameras, and cellular phones, has increased significantly in recent years. In addition, the development of electric vehicles, energy storage batteries, robots and satellites is rapidly increasing. As such, research and development on high-performance secondary batteries are being actively carried out.

Unlike a general primary battery, a secondary battery can be repeatedly charged and discharged. Accordingly, for example, a low-capacity secondary battery in which one battery cell is packaged in a pack form may be used in portable electronic devices, such as cellular phones, notebook computers, and camcorders. Alternatively, a high-capacity battery having a battery pack unit in which dozens of battery cells are connected to each other may be used, for example, as a power source for driving an electric motor of an electric or hybrid electric vehicle.

Currently commercialized secondary batteries include nickel cadmium batteries, nickel metal hydride batteries, nickel zinc batteries, lithium-ion secondary batteries, etc. Among these batteries, lithium-ion secondary batteries have received high attention due to their relatively low self-discharge rate, low memory effect, and high energy density characteristics as compared to nickel-based secondary batteries. Particularly, among lithium-ion secondary batteries, lithium-sulfur (Li-S) secondary batteries have recently been spotlighted as next generation batteries capable of exhibiting high energy density. However, the materials currently used in the manufacture of Li-S secondary batteries have relatively low densities. For example, in a Li-S battery, the density of a positive electrode containing sulfur is as low as 0.3-0.6 g/cc. Due to the low-density characteristics of the positive electrode, it is difficult to improve the performance of the Li-S secondary battery.

Accordingly, research and development on high-density electrodes of Li-S batteries have been continuously promoted to improve the efficiency and performance of Li-S batteries. However, when the density of the electrode is increased, it is difficult to wet the electrode uniformly with an electrolyte, because the porosity of the electrode is lowered. In addition, volumetric swelling may occur while the battery is driven, resulting in degradation of the electrochemical performance of the battery and/or a decrease in battery life. Therefore, there is a great need for development of a Li-S battery using a high-density electrode in which swelling is reduced or minimized, while the electrode is wetted uniformly or evenly with the electrolyte.

Meanwhile, the background description provided in the present specification is for generally presenting the context of the present disclosure. Unless otherwise indicated herein, the data described in the background technology are not prior art to the claims of the present disclosure and are not recognized as prior art or suggestion of prior art just because they are included in the background technology part.

DISCLOSURE

Technical Problem

The present disclosure is designed to solve the problems of the related art. The present inventors have conducted intensive studies to solve the problems, and have found that when a stack including a positive electrode, a separator and a negative electrode stacked successively is inserted to a pouch, the pouch is pressurized from the exterior to fix its thickness, and then an electrolyte is injected into the pouch, in a process for manufacturing a pouch cell-type lithium secondary battery, it is possible to support a small amount of electrolyte uniformly in a high-density electrode, and thus to improve the life characteristics of the battery.

Therefore, the present disclosure is directed to providing a pouch cell-type lithium secondary battery including an electrolyte supported uniformly therein, and a method for manufacturing the same.

Technical Solution

According to the present disclosure, it has been found that the above-mentioned problems can be solved and specific advantages can be accomplished. For example, the battery, method and system according to the present disclosure provide a novel approach to minimize the swelling of a lithium secondary battery.

It should be understood that various individual aspects and features of the present disclosure described herein may be combined with at least one optional individual aspect or feature in any number to form a particularly considered embodiment of the present disclosure, and such a combination is also included in the scope of the present disclosure.

In one aspect of the present disclosure, there is provided a lithium-sulfur battery containing a sulfur-based compound as a positive electrode active material. According to the first embodiment of the present disclosure, there is provided a lithium-sulfur battery containing a sulfur-based compound as a positive electrode active material, wherein the lithium-sulfur battery may include: an electrode assembly including a positive electrode, a negative electrode and a separator between the positive electrode and the negative electrode; a pouch configured to receive the electrode assembly; and an electrolyte, and wherein the lithium-sulfur battery satisfies a swelling factor (SF) equal to or higher than 0 and less than 10 as defined by the following Formula 1:

[Formula 1]

$$SF = (T2 - T1) / (T1) \times 100,$$

wherein T1 is a first thickness of the lithium-sulfur battery, and T2 is a second thickness of the lithium-sulfur battery.

According to the second embodiment of the present disclosure, there is provided the lithium-sulfur secondary battery as defined in the first embodiment, wherein the first thickness is the thickness of the lithium-sulfur battery before the electrolyte is injected to the pouch, and the second thickness is the thickness of the lithium-sulfur battery after the electrolyte is injected to the pouch.

According to the third embodiment of the present disclosure, there is provided the lithium-sulfur secondary battery as defined in the first or the second embodiment, wherein both the first thickness and the second thickness are determined after the electrolyte is injected, each of the first thickness and the second thickness is determined at an optional point of the battery, and the point of determining the first thickness is different from the point of determining the second thickness.

According to the fourth embodiment of the present disclosure, there is provided the lithium-sulfur secondary battery as defined in any one of the first to the third embodiments, wherein the positive electrode includes a sulfur-carbon composite containing a carbonaceous material and sulfur, as a positive electrode active material.

According to the fifth embodiment of the present disclosure, there is provided the lithium-sulfur secondary battery as defined in the fourth embodiment, wherein the sulfur-carbon composite includes sulfur in an amount of 70 wt% or more based on the total weight thereof.

According to the sixth embodiment of the present disclosure, there is provided the lithium-sulfur secondary battery as defined in any one of the first to the fifth embodiments, wherein the positive electrode active material layer of the positive electrode has a density of 0.5-4.5 g/cc.

According to the seventh embodiment of the present disclosure, there is provided the lithium-sulfur secondary battery as defined in any one of the first to the sixth embodiments, wherein the negative electrode includes lithium metal as a negative electrode active material.

According to the eighth embodiment of the present disclosure, there is provided the lithium-sulfur secondary battery as defined in any one of the first to the seventh embodiments, which shows a ratio (E/S) of the weight of electrolyte based on the weight of sulfur of 2.7 or less.

According to the ninth embodiment of the present disclosure, there is provided the lithium-sulfur secondary battery as defined in any one of the first to the eighth embodiments, wherein the positive electrode active material layer of the positive electrode has a porosity of 35-75 vol%.

According to the tenth embodiment of the present disclosure, there is provided the lithium-sulfur secondary battery as defined in any one of the first to the ninth embodiments, which has a capacity of 950-1300 mAh/gs.

According to the eleventh embodiment of the present disclosure, there is provided an electrochemical device including the lithium-sulfur battery as defined in any one of the first to the tenth embodiments as a power source, the electrochemical device including an electric vehicle.

According to the twelfth embodiment of the present disclosure, there is provided a method for manufacturing a lithium-sulfur battery, including the steps of: forming an electrode assembly by stacking a positive electrode, a separator and a negative electrode; allowing the electrode assembly to be received in a pouch; applying a predetermine level of pressure to the pouch in which the electrode assembly is received; injecting a predetermined amount of electrolyte to the pouch, while maintaining the predetermined level of pressure; and sealing the pouch, wherein the lithium-sulfur battery has a swelling factor (SF) equal to or higher than 0 and less than 10 as defined by the following Formula 1:

$$[Formula\ 1]$$

$$SF = (T2 - T1) / (T1) \times 100,$$

wherein T1 is a first thickness of the lithium-sulfur battery, and T2 is a second thickness of the lithium-sulfur battery.

According to the thirteenth embodiment of the present disclosure, there is provided the method for manufacturing a lithium-sulfur battery as defined in the twelfth embodiment, which further includes a step of determining a swelling factor before the pouch is sealed.

According to the fourteenth embodiment of the present disclosure, there is provided the method for manufacturing a lithium-sulfur battery as defined in the thirteenth embodiment, wherein the step of determining a swelling factor includes the steps of: determining the first thickness of the lithium-sulfur battery before the electrolyte is injected to the pouch; and determining the second thickness of the lithium-sulfur battery after the electrolyte is injected to the pouch.

According to the fifteenth embodiment of the present disclosure, there is provided the method for manufacturing a lithium-sulfur battery as defined in any one of the twelfth to the fourteenth embodiments, which further includes a step of determining a swelling factor after the pouch is sealed.

According to the sixteenth embodiment of the present disclosure, there is provided the method for manufacturing a lithium-sulfur battery as defined in the fifteenth embodiment, wherein the step of determining a swelling factor includes the steps of: determining the first thickness of the battery at a first zone of the lithium-sulfur battery; and determining the second thickness of the battery at a second zone of the lithium-sulfur battery.

According to the seventeenth embodiment of the present disclosure, there is provided the method for manufacturing a lithium-sulfur battery as defined in any one of the twelfth to the sixteenth embodiment, wherein the pressure is 100 atm or less.

According to the eighteenth embodiment of the present disclosure, there is provided a system for manufacturing a lithium-sulfur battery, including: a controller; a jig linked to the controller, including a first flat plate and a second flat plate, and configured to apply pressure between the first flat plate and the second flat plate to a level based on the swelling factor of the lithium-sulfur battery; and an electrolyte injecting device linked to the controller and configured to inject an electrolyte to the pouch of the lithium-sulfur battery, wherein the swelling factor (SF) is determined by the following Formula 1:

$$[Formula\ 1]$$

$$SF = (T2 - T1) / (T1) \times 100,$$

wherein T1 is a first thickness of the lithium-sulfur battery, and T2 is a second thickness of the lithium-sulfur battery.

According to the nineteenth embodiment of the present disclosure, there is provided the system for manufacturing a lithium-sulfur battery as defined in the eighteenth embodiment, which further includes a controller configured to control the pressure applied to the lithium-sulfur battery based on the swelling factor.

Advantageous Effects

The method for manufacturing a lithium-sulfur battery according to the present disclosure is characterized in that an electrolyte injection step of injecting an electrolyte to the battery is carried out in an environment where the battery is pressurized. In this manner, it is possible to minimize the volumetric swelling of the battery caused by the electrolyte and to support a small amount of electrolyte uniformly in a high-density electrode having a low porosity, and thus to improve the performance and life characteristics of the battery. In addition, according to the method of the present disclosure, it is possible to provide a battery having a uniform thickness and showing a small change in volume before and after the electrolyte is injected. Particularly, in the case of a lithium-sulfur battery, it is preferred to reduce the porosity of the positive electrode active material layer in order to increase the energy density. In this context, it is possible to support the electrolyte uniformly in the positive electrode having such a low porosity and electrode assembly including the same.

When the battery is a pouch-type battery, the volumetric swelling of the battery is controlled by the pressurization. Therefore, the method according to the present disclosure is particularly applicable to the pouch-type battery effectively.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

FIG. 1 is a schematic view illustrating the lithium secondary battery according to an embodiment of the present disclosure.

FIG. 2a is a schematic view illustrating the lithium secondary battery according to an embodiment of the present disclosure, before an electrolyte is injected thereto.

FIG. 2b is a schematic view illustrating the electrode assembly of the lithium secondary battery according to an embodiment of the present disclosure.

FIG. 3 is a schematic view illustrating the system for manufacturing a lithium secondary battery according to an embodiment of the present disclosure.

FIG. 4a is a schematic view illustrating the lithium secondary battery for determining a swelling ratio according to an embodiment of the present disclosure.

FIG. 4b is a schematic view illustrating the lithium secondary battery for determining a swelling factor according to an embodiment of the present disclosure.

FIG. 5 is a flow chart illustrating the method for manufacturing a lithium secondary battery for the system for manufacturing a battery as shown in FIG. 3 according to an embodiment of the present disclosure.

FIG. 6 is a graph illustrating the initial discharge capacity of the Li-S secondary battery obtained according to an embodiment of the present disclosure as compared to the initial discharge capacity of another Li-S secondary battery.

FIG. 7 is a graph illustrating the discharge cycle characteristics of the Li-S secondary battery obtained according to an embodiment of the present disclosure as compared to the discharge cycle characteristics of the Li-S secondary battery according to Comparative Example.

FIG. 8 is a schematic view illustrating the manufacture of a battery having a non-uniform thickness due to the volumetric swelling at the position of an injection port, when injecting an electrolyte.

BEST MODE

It will be easily understood that other embodiments, feature and advantages of the present disclosure may be realized by the following description.

The singular forms ("a", "an", and "the") of the terms used in this specification are intended to include plural forms unless the context clearly indicates otherwise. Additionally, the use of "or" is intended to include "and/or" unless the context clearly indicates otherwise.

As used herein, "about" is a term of approximation and, as understood by those skilled in the art, is intended to include literally minor changes in the amount mentioned. These variations include standard deviations related to techniques commonly used to measure, for example, the amount of components or components of alloys or composites, or other properties and properties. All values characterized by the above-described modifier "about" are also intended to include the exact numerical values disclosed herein. All ranges also include upper and lower limits.

Any composition described in the present specification is intended to cover a composition formed of various components identified in the present specification, essentially including various components identified in the present specification, or including various components identified in the present specification, unless otherwise expressly indicated.

As used herein, citation of a numerical range for a variable is intended to convey that the variable may be the same as any value(s) within the range as well as any sub-range included by a wider range. Thus, the variable may be equal to all integer values within a numerical range, including the end point of the range. For example, variables described as having values between 0 and 10 may be 0, 4, 2-6, 2.75, 3.19-4.47, or the like.

In the present specification and claims, the singular includes a plurality of indicative objects unless explicitly indicated otherwise in the context. As used in the present specification, the word "or" is used as a "comprehensive" meaning of "and/or" and is not used as an "exclusive" meaning of "any one/or".

Unless otherwise indicated, each of the individual features or embodiments of the present specification may be combined with any other individual feature or embodiment described herein without limitation. Such a combination is specifically considered to be within the scope of the present disclosure regardless of whether it is explicitly described as a combination herein.

The technical and scientific terms used in the present specification have the meanings generally understood by those skilled in the art to which the present specification belongs, unless otherwise defined. Various methodologies and materials known to those skilled in the art are referred to herein.

Although some terms are used with detailed descriptions of specific examples of the present disclosure, they may be interpreted in the most extensive and reasonable manner. In practice, certain terms can be emphasized below. However, all terms intended to be interpreted in a limited manner are explicitly and specifically defined in this detailed description section. All general descriptions and detailed descriptions of the contents described in the specification are illustrative and descriptive only and do not limit the features as claimed.

In the present specification, the term "for example" or "exemplary", is used only to mean "exemplary" rather than "desirable" or "ideal". The term "or" means comprehensively and means some or all of the items listed. The term "comprise(s)", "comprising", "include(s)" or "including", or any other variant of these terms, means that processes, methods or products containing constitutional elements may contain other elements that are not necessarily explicitly listed, or are not specific to those processes, methods, goods, or devices.

In one aspect of the present disclosure, there is provided a lithium secondary battery that can be manufactured by inserting an electrode assembly to the housing of a lithium secondary battery. The electrode assembly may include a positive electrode, a negative electrode and a separator interposed between the positive electrode and the negative electrode. According to an embodiment of the present disclosure, the electrode assembly may include a plurality of positive electrodes and a plurality of negative electrodes stacked sequentially and repeatedly. For example, a positive electrode may be provided as a first layer of the electrode assembly. Then, a separator may be stacked on the top of the positive electrode, and a negative electrode may be stacked on the top of the separator. Further, another separator may be provided on the top of the negative electrode, and another positive electrode may be stacked thereon. In addition, the electrode assembly may be a stacked type or stacked/folded type electrode assembly in which the electrodes and the separator are stacked sequentially, or may have a jelly-roll type shape. Then, the prepared electrode assembly may be inserted to the housing of a battery. For example, the housing of the battery may have a shape of can made of a metal or a pouch-like shape including a polymer film, but is not limited thereto.

For example, a pouch-type battery (or a pouch-type battery cell) may be formed by inserting an electrode assembly (e.g. a stacked electrode assembly or jelly-roll electrode assembly) to a pouch. Then, an electrolyte is injected into the pouch and the pouch is sealed to assemble a battery cell. The electrolyte injected to the pouch is introduced to the pores present in the electrode assembly so that the pores may be filled with the electrolyte, while the vacant space in the housing other than the volume (apparent volume) occupied by the electrode assembly may be filled with the electrolyte. The pores may include pores formed in at least one of a positive electrode, a negative electrode and a separator, and may be those formed in the positive electrode. Thus, the amount of electrolyte injected to the pouch is predetermined before the electrolyte is injected to the pouch, thereby ensuring uniform wetting and preventing the overflow of an excessive amount of electrolyte. Therefore, a change in thickness of the pouch cell (or battery cell) detected after the electrolyte is injected to the pouch cell suggests that the electrode assembly, particularly the positive electrode, is not uniformly wetted or is impregnated non-uniformly with the electrolyte.

As discussed above, in a Li-S battery, non-uniform wetting with an electrolyte may occur due to the low porosity of at least one electrode (e.g. high-density positive electrode(s)). Therefore, when the high-density positive electrode of the Li-S battery is not uniformly wetted with the electrolyte, an excessive amount of electrolyte is swelled to cause defects in the battery, resulting in degradation of the performance and life of the battery.

According to an embodiment of the present disclosure, there is provided a lithium-ion secondary battery including a high-density electrode and showing minimized swelling. The lithium secondary battery according to an embodiment of the present disclosure has a swelling factor (SF) equal to or higher than 0 and less than 10, or a swelling factor of 0-7 or 0-5, as defined by the following Formula 1:

[Formula 1]

$$SF = (T2 - T1) / (T1) \times 100,$$

wherein T1 is a first thickness, and T2 is a second thickness.

According to an embodiment of the present disclosure, the first thickness is the thickness at an optional point of the battery before the injection of an electrolyte, and the second thickness is the thickness of the battery after the injection of an electrolyte (Embodiment A). Herein, the first thickness and the second thickness are determined preferably at the same point before and after the injection of an electrolyte. Meanwhile, according to an embodiment of the present disclosure, the swelling factor, SF, may be a value expressed by averaging the values determined at two or more points. According to an embodiment of the present disclosure, SF may be determined two or more points, or three or more points. Meanwhile, the second thickness may be determined before or after sealing the battery.

According to an embodiment of the present disclosure, the electrolyte is injected to the battery in Embodiment A, while external pressure is applied to the battery, wherein T2 may be determined while maintaining the pressure after the electrolyte injection, or after releasing the pressure. Since T1 is a value determined before the electrolyte injection, it may represent substantially the same thickness when the pressure is applied or not.

Additionally or alternatively, the first thickness may be the thickness determined at one optional point of the battery, and the second thickness may be the thickness determined at another optional point of the battery (Embodiment B). Hereinafter, when SF in Embodiment B is required to be differentiated from SF in Embodiment A, the former is represented by SF'. With reference to SF', the first thickness and the second thickness may be determined after the electrolyte injection. In addition, the first thickness and the second thickness may be determined after the electrolyte injection and before or after sealing the pouch. In addition, according to an embodiment of the present disclosure, the first thickness and the second thickness may be a combination of two values selected from a plurality of values determined at two or more optional points and showing the largest value of SF. It is possible to determine whether the battery has a uniform thickness or not after the electrolyte injection, through SF'. In other words, according to Embodiment B, a deviation in thickness of the battery after the electrolyte injection can be determined, and thus it is possible to determine whether the electrolyte is injected uniformly into the electrode assembly or not. Meanwhile, in Embodiment B, the electrolyte is injected to the battery, while external pressure is applied to the battery, wherein both the first thickness and the second thickness may be determined while applying pressure to the battery, or after releasing the pressure.

The lithium secondary battery according to the present disclosure may have an SF value equal to or larger than 0 and less than 10, or an SF value of 0-7 or 0-5, as determined according to Embodiment A.

Additionally or alternatively, the lithium secondary battery according to the present disclosure may have an SF value (SF') of 0-7, 0-5, 0-3, or 0-1, as determined according to Embodiment B.

According to an embodiment of the present disclosure, the battery may satisfy at least Embodiment A, or may satisfy both Embodiment A and Embodiment B.

Since the battery according to the present disclosure is inhibited from volumetric swelling by injecting the electrolyte under the application of pressure, SF according to Embodiment B may represent a value of 7 or less substantially, when SF according to Embodiment A has a value of less than 10.

Hereinafter, SF will be explained mainly with reference to Embodiment A. However, description about Embodiment B is not excluded, and the following description may also be applied to Embodiment B.

When the lithium-ion secondary battery has an SF value equal to or higher than 0 and less than 10 ($0 \leq SF < 10$), or an SF value of 0-7 ($0 \leq SF \leq 7$) or 0-5 ($0 \leq SF \leq 5$) as determined according to the above Formula 1, it shows little or no swelling. Preferably, SF is 0-5. Meanwhile, reference will be made to the above-defined range about SF according to Embodiment B.

Meanwhile, according to the present disclosure, the thickness means the thickness of the battery in the direction of stacking the constitutional elements of the battery, such as electrodes and a separator, on the basis of the electrode assembly.

According to an embodiment of the present disclosure, it is possible to obtain a lithium-ion secondary battery which shows minimized swelling or no swelling, and for example, satisfies $0 \leq SF < 10$, $0 \leq SF \leq 7$ or $0 \leq SF \leq 5$.

Such a lithium secondary battery may be obtained by inserting an electrode assembly (e.g. a stacked type electrode assembly, a jelly-roll electrode assembly, or the like) to a battery housing. Then, the housing may be disposed in a jig configured to apply a predetermined level of pressure to at least one surface of the battery housing. For example, the housing may be one used for a pouch-type battery, but is not limited thereto. According to an embodiment of the present disclosure, when the housing is a pouch, the effect of the present disclosure may be more predominant as compared to a metallic can housing. In the case of a metallic can, volumetric swelling may be inhibited by the rigidity of the metal. However, a pouch-type housing has lower rigidity and is more easily deformed by the external pressure, as compared to a metallic can. Therefore, when the battery according to the present disclosure is manufactured by using a pouch-type housing material, the effect of the present disclosure may be maximized. However, even when a metallic can is used as a housing material, it is possible to realize an improved effect by the method for manufacturing a battery according to the present disclosure, depending on the particularly used metallic material and its unique properties.

After that, an electrolyte is injected to the pouch, wherein the electrode assembly, particularly the positive electrode may be evenly or uniformly wetted with the electrolyte due to a predetermined level of pressure applied by the jig. For example, the Li-S battery obtained according to the present disclosure may include a high-density positive electrode, and an electrolyte with which the high-density positive electrode is wetted evenly or uniformly. The Li-S battery may satisfy $0 \leq SF < 10$, preferably $0 \leq SF \leq 5$, and thus may show minimized swelling or no swelling. In addition, since the high-density positive electrode of the Li-S battery according to the present disclosure has a structure having improved energy density derived from a decrease in porosity, it is possible to substantially reduce the amount of an electrolyte required for operating the Li-S battery, to improve the battery performance and to improve the battery life, when the condition of $0 \leq SF < 10$ is satisfied after the electrolyte injection.

According to an embodiment of the present disclosure, one optional point or more points are specified in the battery housing before the electrolyte is injected, and the thickness is determined before and after the electrolyte injection at each point, thereby detecting or determining a change in thickness of the lithium secondary battery. When one point is specified, the measurement at this point may be the thickness. When two or more points are specified, the average of the individual measurements may be the thickness. Otherwise, as mentioned above, two or more points are specified, the average of the SF values determined individually at those points may be the total SF value.

Meanwhile, alternatively or additionally, the surface irregularities of the lithium secondary battery may be determined after the assemblage of the battery is completed (e.g. after the electrolyte injection is completed, or after the electrolyte injection is completed and the pouch of the battery cell is sealed) to detect or determine a change in thickness of the battery (the difference between the first thickness and the second thickness may be taken as SF).

Hereinafter, the present disclosure will be explained in more detail with reference to the accompanying drawings. The description of the present disclosure in accordance with the drawings is a specific embodiment of the present disclosure, and the present disclosure is not limited to the illustrated drawings or specific embodiments based on the drawings. Examples or embodiments described herein as "exemplary" should not be construed as desirable or advantageous, for example, over other embodiments or embodiments. Rather, it is intended to reflect or indicate that the embodiment(s) are "exemplary" embodiments(s). The technical subject matter of the present disclosure may be embodied in various and different forms, and thus it should be interpreted that the scope of the present disclosure is not limited by any exemplary embodiment described herein. Exemplary embodiments are provided only for illustrative purposes. Therefore, within the scope of reasonable interpretation based on the present specification, the scope of the present disclosure, particularly the claims, includes a wider scope than illustrated. First of all, for example, the technical idea or subject matter of the present disclosure may be embodied as a method, device, component, or system. Thus, the embodiment may take the form of, for example, hardware, software, firmware, or any combination thereof (excluding the software itself). Therefore, the following detailed description is not intended to be accepted in a limited sense.

Throughout the specification and claims, the terms used may have subtle meanings proposed or implied in the context beyond the explicitly stated meanings. Likewise, the phrase "in an embodiment" used in the present specification does not necessarily refer to the same embodiment, and the phrase "in another embodiment" used in the present specification does not necessarily refer to another embodiment. For example, the claimed subject matter is intended to include a combination of exemplary embodiments in whole or in part.

The present disclosure will be explained in more detail hereinafter with reference to the accompanying drawings.

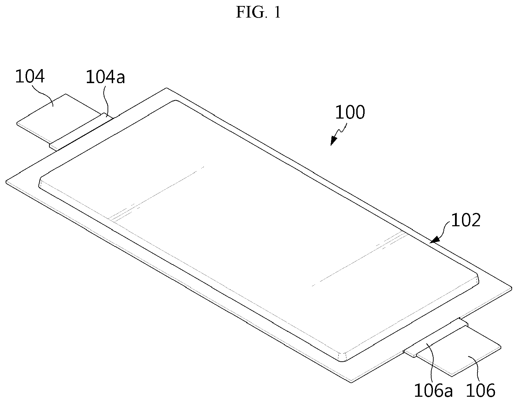

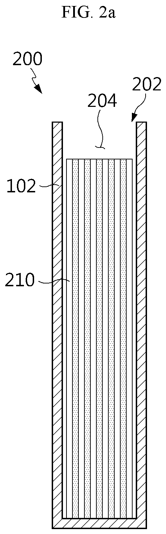

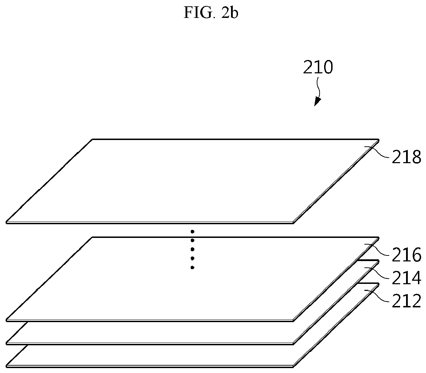

FIG. 1 is a schematic view illustrating the lithium secondary battery 100 according to an embodiment of the present disclosure. The lithium secondary battery 100 may include an electrode assembly (not shown), a housing 102, a first electrode tab 104 and a second electrode tab 106. For example, the housing 102 may be the pouch as shown in FIG. 1. However, the housing 102 may be a prismatic housing, a cylindrical housing, or the like, but is not limited thereto. The first electrode tab 104 may be a positive electrode tab and the second electrode tab 106 may be a negative electrode tab, or vice versa. The first electrode tab 104 and the second electrode tab 106 may be electrically connected to the electrode assembly (depicted in detail in FIG. 2b hereinafter) of the lithium secondary battery 100. According to an embodiment, the first electrode tab 104 may be electrically connected with at least one positive electrode of the electrode assembly. In addition, the second electrode tab 106 may be electrically connected with at least one negative electrode of the electrode assembly. In FIG. 2, the first electrode tab 104 and the second electrode tab 106 are disposed at the opposite sides of the lithium secondary battery 100, but are not limited thereto. Thus, the first electrode tab 104 and the second electrode tab 106 may be disposed at any sides or positions of the lithium secondary battery 100, individually or in combination.

FIG. 2a is a schematic view illustrating the lithium secondary battery 200 according to an embodiment of the present disclosure, before an electrolyte is injected thereto. The battery 200 may include a housing 102 (e.g. a pouch), an electrode assembly 210 and a vacant volume (or a vacant space, such as a dead space) 204. The housing 102 may include an opening 202, and the electrolyte may be injected to the housing through the opening 202 in a process for manufacturing a battery according to the present disclosure, and then introduced into the electrode assembly 210 (for example, into the pores of an electrode) so that the electrode assembly may be wetted with the electrolyte. The optionally remaining electrolyte may be packed or dispersed in the vacant space 204. The vacant space 204 is a space generated while the sheet-like pouch film is deformed (for example, folded or bent) in order to receive a specific shape of electrode assembly. Therefore, the internal space of the housing preferably coincides with the shape of the electrode assembly so that no vacant space may be generated. However, the volume of the internal space of the housing substantially exceeds the volume (apparent volume) of the electrode assembly received therein, and thus a vacant space is generated. When manufacturing a battery, the housing is designed preferably in such a manner that the vacant space may be minimized. According to an embodiment of the present disclosure, an excessive amount of electrolyte not introduced into the electrode assembly 210 but remains may be stored in the vacant space 204. Therefore, when manufacturing a battery in the above-described manner, a vacant space 204 is generated actually, and the amount of electrolyte injected to the housing is determined considering the volume of the vacant space. Meanwhile, when the amount of electrolyte injected to the housing 102 substantially corresponds to the volume of the pores of the electrode assembly 210 and the volume of the vacant space, and the electrode assembly is wetted uniformly with the electrolyte, the battery 200 after the electrolyte injection may have substantially the same thickness as the thickness of the battery before the electrolyte injection.

FIG. 2b is a schematic view illustrating the electrode assembly 210 of the lithium secondary battery 200 (or battery 100) according to an embodiment of the present disclosure. The electrode assembly 210 may include at least one positive electrode 212, at least one separator 214 and at least one negative electrode 216. For example, the electrode assembly 210 may be formed by stacking a positive electrode 212, a separator 214 and a negative electrode 216 sequentially and repeatedly, and stacking the last layer 218 (a positive electrode layer or negative electrode layer depending on the stacking order and direction). For example, the number of each of the negative electrode, the positive electrode and the separator contained in the electrode assembly may be based on a desired level of capacity and/or function of the electrode assembly 210 for the battery 100 or 200.

According to an embodiment of the present disclosure, the positive electrode 212 may include a positive electrode current collector and a positive electrode active material layer (not shown) disposed on at least one surface or both surfaces of the positive electrode current collector.

The positive electrode current collector may include an electrically conductive material, such as aluminum foam, a nickel foam, etc., but is not limited thereto. For example, the positive electrode active material layer may include a positive electrode active material, a binder and a conductive material.

The total content of the positive electrode active material based on the positive electrode active material layer may occupy about 70-95% of the total weight of the positive electrode active material layer. When the ratio of the positive electrode active material contained in the positive electrode active material layer is less than the above-defined range of 70-95% (for example, less than 60%), the capacity of the battery 100 may be decreased. When the ratio of the positive electrode active material exceeds the above-defined range (for example, larger than 95%), the battery 100 may cause an over-voltage.

In addition, according to an embodiment of the present disclosure, the positive electrode active material may include a sulfur-based positive electrode active material, and the sulfur-based positive electrode active material may be present preferably in an amount of 70 wt% or more, 80 wt% or more, 90 wt% or more, or 99 wt% or more, based on the weight of the positive electrode active material. According to a particular embodiment of the present disclosure, the positive electrode active material may include the sulfur-based positive electrode active material in an amount of 90 wt% or more, or may include the sulfur-based positive electrode active material alone. The sulfur-based positive electrode active material may include sulfur, elementary sulfur ($S_8$), a sulfur-containing compound, or the like, but is not limited thereto. For example, the sulfur-based positive electrode active material may include $Li_2S_n$ (wherein n is a real number of 1 or more), organic sulfur composite material or a carbon-sulfur composite $(C_2S_x)_n$ (wherein x is a real number including 2.5-50, and n is a real number of 2 or more).

Meanwhile, according to the present disclosure, the content of sulfur in the sulfur-based positive electrode active material may be 60 wt% or more, 70 wt% or more, 80 wt% or more, or 90 wt% or more. According to a particular embodiment of the present disclosure, the sulfur-based positive electrode active material may be a carbon-sulfur composite, wherein the content of sulfur may be 60 wt% or more, 70 wt% or more, or 80 wt% or more, based on 100 wt% of the carbon-sulfur composite.

Non-limiting examples of the conductive material may include: a carbonaceous material, such as carbon black, acetylene black or ketjen black; a conductive polymer, such as polyaniline, polythiophene, polyacetylene or polypyrrole; or the like. The conductive material may be used in an amount of about 1-20 wt%, 1-10 wt%, or 1-7 wt%, based on the total weight of the positive electrode active material layer. When the content of the conductive material is less than 1 wt% based on the total weight of the positive electrode active material layer, it is not possible to provide a sufficient effect or result of improving the electrical conductivity derived from the conductive material. On the other hand, when the content of the conductive material is larger than 20 wt%, the amount of the positive electrode active material is relatively reduced, resulting in a drop or decrease in the capacity of the battery 100. Meanwhile, in this discloser, the conductive material and a carbon material of the sulfur-carbon composite should be understood as separate components.

The binder is a binder material for an electrochemical device, and is not limited to any particular material, as long as it allows binding of the ingredients, such as the electrode active material, in the electrode and ensures a desired level of binding force between the electrode active material layer and the current collector. Non-limiting examples of the binder may include, but are not limited to: acrylic binder polymers, such as poly(methyl)methacrylate or poly(ethyl acrylate) containing a polyacrylate polymerization unit; a fluorine-based binder polymer containing a vinylidene fluoride-based polymerization unit, such as polyvinylidene fluoride, polyvinylidene fluoride-co-polyhexafluoropropylene, polyvinylidene fluoride-co-trichloroethylene, polyvinylidene fluoride-co-tetrafluoroethylene, polyvinylidene fluoride-co-trifluoroethylene, polyvinylidene fluoride-co-trifluorochloroethylene and polyvinylidene fluoride-co-ethylene; poly(vinyl acetate); polyvinyl alcohol; polyethylene oxide; (alkylated) polyethylene oxide; crosslinked polyethylene oxide; polyvinyl ether; polyvinyl pyrrolidone; polytetrafluoroethylene; polyvinyl chloride; polyacrylonitrile; polyvinyl pyridine; polystyrene; derivatives, blends or copolymers thereof; or the like.

The binder may be present in an amount of about 2-10 wt% based on the total weight of the positive electrode active material layer. When the content of the binder is less than 2 wt%, it is not possible to provide a sufficient effect or result of improving the adhesion among the positive electrode active material particles, or the adhesion between the positive electrode active material and the positive electrode current collector. On the other hand, when the content of the binder is larger than 10 wt%, the amount of the positive electrode active material is relatively reduced, resulting in a drop or decrease in the capacity of the battery 100.

According to an embodiment of the present disclosure, the positive electrode 212 may be obtained by introducing positive electrode materials including a positive electrode active material, a conductive material and a binder to an organic solvent to provide a composition for forming a positive electrode active material layer, and applying the composition to the top of a positive electrode current collector, followed by drying. If necessary, the electrode obtained by the above-mentioned method may be pressurized to a predetermined thickness. Herein, if necessary, heat may be applied at a predetermined temperature. According to an embodiment, the organic solvent is a dispersion medium of the positive electrode materials and may be an easily evaporating solvent. For example, the organic solvent may include at least one selected from N-methyl pyrrolidone (NMP), acetonitrile, methanol, ethanol, tetrahydrofuran, water and isopropyl alcohol. In a variant, the positive electrode may be prepared through the dry mixing of the positive electrode active materials, not by introducing them to an organic solvent, or may be prepared in a wet state through the introduction of a small amount of solvent. In addition, the positive electrode may be obtained by applying the positive electrode materials to the surface of the positive electrode current collector, followed by pressurization.

According to an embodiment of the present disclosure, the negative electrode 216 includes a negative electrode active material layer containing a negative electrode active material. If necessary, the negative electrode may include a negative electrode current collector, wherein the negative electrode active material layer (not shown) may be disposed on at least one surface or both surfaces of the negative electrode current collector.

According to an embodiment, the negative electrode current collector may be selected from the group consisting of copper, aluminum, stainless steel, titanium, silver, palladium, nickel, alloys thereof and combinations thereof. Herein, stainless steel may be surface treated with carbon, nickel, titanium or silver, and particular examples of the alloys may include aluminum-cadmium alloy. In addition, baked carbon, a surface-treated nonconductive polymer, conductive polymer, or the like, may be used as a precursor.

The negative electrode active material may include lithium metal, a carbonaceous material including crystalline carbon, amorphous carbon or a combination of crystalline carbon with amorphous carbon, tin, tin oxide ($SnO_2$, etc.), lithium titanium oxide (LTO), titanium nitrate, silicon (Si), silicon oxide, alloy of lithium with another metal, such as Si, Al, Sn, Pb, Zn, Bi, In, Mg, Ga or Cd, or the like.

According to an embodiment of the present disclosure, when lithium metal is used as a negative electrode active material, it may be formed into a thin film and bound to the current collector.

Additionally or alternatively, the negative electrode active material layer may include a conductive material and a binder together with the negative electrode active material. The type and content of the conductive material and/or binder may be substantially similar to the conductive material and binder described above with reference to the positive electrode 212 according to the present disclosure.

According to an embodiment of the present disclosure, the separator 214 of the electrode assembly 210 is a constitutional element of the battery which is disposed between the positive electrode 212 and the negative electrode 216 to electrically insulate both electrodes from each other and to provide an ion channel. Any separator may be used with no particular limitation, as long as it may be used for a lithium secondary battery. According to an embodiment of the present disclosure, a separator having a low resistance and excellent electrolyte-absorbing property may be used preferably. The separator may include a porous polymer film, a non-woven web including a polymer material, eutectic glass fibers, or the like. Non-limiting examples of the polymer may include a porous polymer including a polyolefin-based polymer, such as ethylene homopolymer, propylene homopolymer, ethylene/butene copolymer, ethylene/hexene copolymer, ethylene/methacrylate copolymer, or the like. Such a polymer film may be used in the form of a single layer or a multilayer-type film by stacking multiple layers of films.

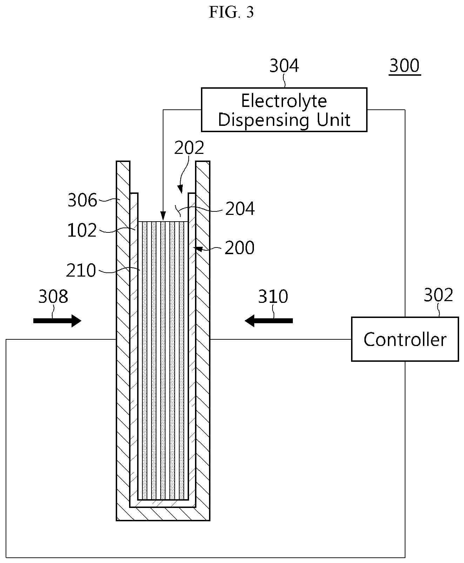

FIG. 3 is a schematic view illustrating a system 300 for manufacturing a battery in order to manufacture the lithium secondary battery according to an embodiment of the present disclosure. The system 300 may include a controller 302, an electrolyte dispensing unit 304 and a jig 306.

According to an embodiment of the present disclosure, the jig includes two flat plates disposed in parallel with each other, and may uniformly apply pressure to an object (e.g. a battery) disposed between the flat plates through a decrease in the interval between the flat plates. In addition, when pressure is applied and released by the jig, the flat plates may be retained in parallel with each other.

According to an embodiment of the present disclosure, a battery is disposed between the two flat plates of the jig, and the stacking direction of the electrode assembly may be perpendicular to the direction of the disposition of the flat plates. In other words, the electrode plate (positive electrode and/or negative electrode) included in the electrode assembly may be disposed in parallel with the flat plates.

According to an embodiment of the present disclosure, the system further includes a thickness measuring unit to determine the thickness of the battery. For example, the thickness measuring unit may be included in or linked to the jig. When the battery is inserted between the two flat plates, for example, between the first flat plate, i.e. upper plate, and the second flat plate, i.e. lower plate, the thickness measuring sensor measures the interval between the upper plate and the lower plate of the jig so that the thickness of the battery may be recognized. The system may further include a calculator (not shown), and the calculator calculates a swelling factor (SF) based on the measurement of the battery thickness transferred from the thickness measuring sensor and transfer the SF value to the controller. Meanwhile, a time point where the thickness measuring sensor determines the thickness may be controlled automatically or manually by the operator through the controller.

According to an embodiment of the present disclosure, the thickness T1 of the battery before the electrolyte injection may be the interval between the upper plate and the lower plate, when the battery is disposed on the second flat plate (lower plate), the interval between the upper plate and the lower plate of the jig is reduced, and then the first flat plate (upper plate) of the jig is in contact with the battery. In other words, the thickness, T1, is the thickness of the battery while substantially no pressure is applied thereto. Otherwise, T1 may be determined by using another contact type or non-contact type thickness gauge, not a jig, and then may be input to the calculator. Meanwhile, the thickness, T2, after the electrolyte injection may be determined continuously at a predetermined time interval by the sensor, while the electrolyte is injected. Herein, SF values are determined continuously in the calculator and transferred to the controller, and then pressure may be controlled in such a manner that the SF measurement may be a value of less than 10, 7 or less, 5 or less, or 3 or less.

Meanwhile, after finishing the electrolyte injection, the thickness, T2, of the battery may be determined. In this case, the thickness may be determined, while the pressure applied finally to the battery is maintained. Otherwise, T2 may be determined while the pressure is released. The thickness, T2, of the battery after releasing the pressure may be determined in the same manner as the thickness, T1, of the battery. In a variant, besides the use of a jig, the thickness of the battery may be determined by using various contact type or non-contact type thickness gauges known to those skilled in the art. Meanwhile, determination of thicknesses, T1 and T2, for the determination of SF' may be carried out while the pressure applied finally to the battery is maintained, or after the pressure applied to the battery is released.

In addition, according to an embodiment, the system 300 may further include a machine or device (not shown) configured to manufacture the electrode assembly 210, such as a device configured to insert the electrode assembly to the housing 102.

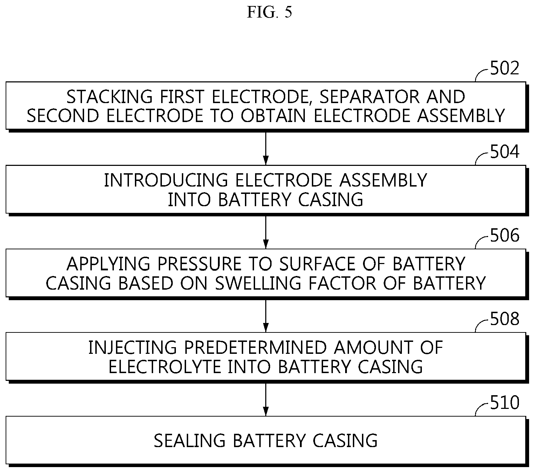

The controller may be configured in such a manner that the process, such as the process shown in FIG. 5, for manufacturing a battery disclosed herein may be facilitated. The controller 302 may include a computer system or one or more processors of a computer system. The process or processing step carried out by the computer system or one or more processors may refer to an operation. The one or more processors may be configured to perform a process by accessing instructions (e.g., software or computer-readable code) that cause one or more processors to perform the process when executed by one or more processors. The command may be stored in a memory of a computer system. The processor may be a central processing unit (CPU), a graphic processing unit (GPU), or another type of processing unit.

According to an embodiment, the controller 302 may automatically control the electrolyte dispensing unit 304 so that a predetermined amount of electrolyte may be injected to the battery 200. Alternatively, the controller 302 and/or electrolyte dispensing unit 304 may be operated in such a manner that the worker may inject the electrolyte manually.

According to an embodiment, the controller 302 may be configured to apply pressure (or force) to at least one side of the jig 306. The pressure may be applied from a first direction 308 and/or a second direction 310. According to an embodiment, the jig 306 may include at least one pressurizing device (or mechanism) configured to apply pressure at least from the first direction 308 and/or the second direction 310. The controller 302 may be configured to control the pressure applied by the jig 306 or from the jig 306 to the battery 200. According to an embodiment, the jig 306 may be configured to apply the same pressure or constant pressure to a single surface or each of the whole surfaces. Additionally or alternatively, the jig 306 may be configured to apply a different level of pressure to different surfaces of the battery 200, different zones of a single surface, or each surface of multiple surfaces of the battery 200.

According to an embodiment, the jig 306 may be configured to apply pressure to the battery 200 based on a predetermined battery structure (e.g. thickness of the battery before the electrolyte injection) and structural strength (e.g. tensile strength or elastic strength of the battery). For example, different levels of pressures may be applied to the battery 200 based on the size, material and shape of the jig 306, while not applying additional external force or pressure to the jig 306. For example, the jig 306 may apply pressure to at least one of a container and housing. Alternatively or additionally, a pressurizing device (or mechanism) may be linked to or incorporated to the jig 306 in order to apply one or more configurable levels of pressures to the jig 306 or from the jig 306 and to facilitate application of one or more levels of pressures. For example, the pressurizing device may include a motor, a spring, or the like. According to an embodiment, the controller 302 may be configured to control the pressure to be applied or the pressure applied from the jig to the battery automatically or manually with at least one pressurizing device or pressurizing mechanism. Herein, the level of pressure may be determined by the operation of the system 300.

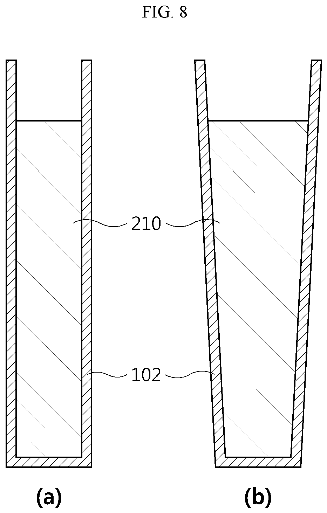

As described above, in the Li-S battery according to the present disclosure, nonuniformity of an electrolyte or non-uniform wetting with an electrolyte may occur due to the low porosity of a high-density positive electrode. For example, when an electrolyte is injected to the housing of the battery 200, while not applying pressure or force to the battery 200, a strong capillary phenomenon may occur at a site where the positive electrode is in contact with the electrolyte. Therefore, excessive swelling may occur at the initial contact point of the positive electrode with the electrolyte or the surroundings thereof. Such excessive swelling may prevent distribution or division of the electrolyte to the other zones of the battery 200. In this case, the positive electrode may include pores in which the electrolyte is not distributed uniformly or not wetted with the electrolyte, and thus the battery may be degraded in terms of electrochemical performance, such as life characteristics. FIG. 8 is a schematic view illustrating the manufacture of a battery having a non-uniform thickness due to the volumetric swelling at the position of an injection port, when injecting an electrolyte.

Referring to FIG. 3, the battery 200 may be a Li-S battery including sulfur as a positive electrode active material. The positive electrode active material layer(s) 212 may have a density of 0.5-1.3 g/cc, or 0.7-1.3 g/cc. The density of the positive electrode active material layer is apparent density, which may be calculated by the formula of [weight (g) of positive electrode active material layer / volume (cc) of positive electrode active material layer]. According to an embodiment of the present disclosure, the positive electrode(s) 212 may have a porosity of 75 vol% or less, 70 vol% or less, or 65 vol% or less. Meanwhile, the positive electrode(s) may have a porosity of 35 vol% or more. When the positive electrode has a porosity of less than 35 vol%, a problem related with ion transport may occur. Meanwhile, when the positive electrode has a porosity of larger than 75 vol%, it causes degradation of energy density and mechanical strength. In addition, the amount of electrolyte injection may be increased. When the porosity is larger than 75 vol%, injection of an electrolyte having an adequate range of E/S as described hereinafter may cause the electrode assembly not to be totally wetted with the electrolyte. Meanwhile, the porosity (vol%) may be calculated according to the formula of [{1 - (apparent density / true density)} x 100]. The true density may be determined from the ingredients contained in the positive electrode active material layer and the density of each ingredient. Otherwise, the porosity may be determined by using an instrument, such as autoprore IV 9500 available from Micrometrics Co., according to the mercury intrusion porosimetry of ASTM D 4284-92.

According to an embodiment of the present disclosure, the weight ratio of electrolyte/sulfur (E/S) may be 2.7 or less in the battery 200. The weight of sulfur means the weight of sulfur contained in the positive electrode active material of the positive electrode 212, and the weight of electrolyte means the weight of electrolyte injected to the battery. For example, the ratio, E/S, may be larger than 0, 1.0 or more, or 1.5 or more. Meanwhile, the ratio, E/S, may be 2.7 or less, 2.5 or less, or 2.0 or less. When the ratio, E/S, is 0 (E/S = 0), no electrolyte is present in the battery, i.e., the ratio refers to the battery 200 before the electrolyte is injected thereto. Meanwhile, when the ratio, E/S, is larger than 2.7 (E/S > 2.7), the positive electrode(s) 212 of the battery 200 has an excessively high porosity, and thus an excessive amount of electrolyte is present in the battery 200. This may refer to a density of the positive electrode, not within the adequate range.

As shown in FIG. 3, the system 300 according to the present disclosure can provide a cell 200 which shows minimized or no volumetric swelling through a pressurization process. According to an embodiment, the battery 200 may be inserted, disposed or arranged in a jig 306 before an electrolyte is injected to the battery 200. According to an embodiment, the battery 100 may be a Li-S battery. The electrode assembly (e.g. electrode assembly 210) of the Li-S battery may include a high-density positive electrode 212 having a low porosity. For example, the electrode assembly 210 may be a lithium-ion battery including a high-density positive electrode(s) having a density of 0.5-4.5 g/cc, or 0.7-4.5 g/cc. As used herein, the density of an electrode means the density of the electrode active material layer of the electrode. In other words, the density of a positive electrode means the density of the positive electrode active material layer.

According to an embodiment of the present disclosure, the density of the positive electrode may be 0.5 g/cc or more, 0.7 g/cc or more, 0.8 g/cc or more, or 0.9 g/cc or more. In addition, the density of the positive electrode may be 4.5 g/cc or less, or 4.0 g/cc or less. When the density of the positive electrode is excessively high beyond the above-defined range, the battery life and/or performance may be degraded or deteriorated. Particularly, the positive electrode according to the present disclosure, includes a sulfur-based positive electrode active material as a positive electrode active material and preferably has a density of 0.7 g/cc or more. In addition, the upper limit of the density of the positive electrode may be controlled suitably within the above-defined range.

According to the present disclosure, when manufacturing a battery, particularly when injecting an electrolyte, a pressurization process may be carried out so that the pores of the positive electrode may be wetted uniformly with the electrolyte. The pressurization process may be carried out based on at least one factor selected from various factors including the porosity and density of a positive electrode(s), ratio E/S and the shape and size of a battery.

According to an embodiment of the present disclosure, the level of pressure applied during the pressurization process may be controlled based on the thickness of a cell, particularly, T1 and T2. While the electrolyte is injected, T2 may be determined continuously through a thickness gauge linked to the jig. Based on each measurement of T2, a relatively high pressure may be applied to a battery showing a high SF value (high degree of swelling) in order to reduce the swelling, and a relatively low pressure may be applied to a battery showing a low SF value (low degree of swelling). Since the electrolyte injection is performed in a space defined by the thickness of the cell, it is possible to inhibit the electrode from swelling occurring upon the wetting with the electrolyte.

According to an embodiment of the present disclosure, the pressure during the pressurization may be 100 atm or less. For example, the pressure may be 0.1-100 atm, 1-100 atm, 3-100 atm, or 5-100 atm. Particularly, the pressure may be 100 atm or less, 70 atm or less, 50 atm or less, 30 atm or less, or 10 atm or less. When the pressure is less than 0.1 atm, the thickness of the battery may not be retained constantly. In other words, when a sufficient level of pressure is not applied to the battery housing, excessive swelling occurs at a site where the electrolyte is in contact with the electrode assembly (or positive electrode) for the first time, resulting in an increase in the thickness of the battery. On the other hand, when the pressure during the pressurization is larger than 100 atm, excessive pressure is applied to the housing, and thus the constitutional elements of the electrode assembly, such as the electrodes and the separator, may be deformed, shrunk or damaged. Meanwhile, according to an embodiment of the present disclosure, the pressure is maintained preferably within such a range that T2 determined continuously during the electrolyte injection may be equal to or higher than T1, i.e. SF may be equal to or higher than 0.

As shown in FIG. 3, the level of pressure applied to the battery 200 from the jig 306 or by the jig 306 may be adjusted based on a desired swelling factor (SF) of the battery 200.

According to an embodiment of the present disclosure, the swelling factor (SF) of the battery (100 and/or 200) may be defined by the following Formula 1:

$$[\text{Formula 1}]$$

$$SF = (T2 - T1) / (T1) \times 100$$

According to an embodiment of the present disclosure, SF in Formula 1 is a swelling factor, T1 means the thickness of the battery 200 before an electrolyte is injected to the housing 102, and T2 means the thickness of the battery 200 after an electrolyte is injected to the housing 102. Additionally or alternatively, T1 may be the thickness of the battery at an optional first point of the battery surface, and T2 may be the thickness of the battery at an optional second point different from the point corresponding to T1.

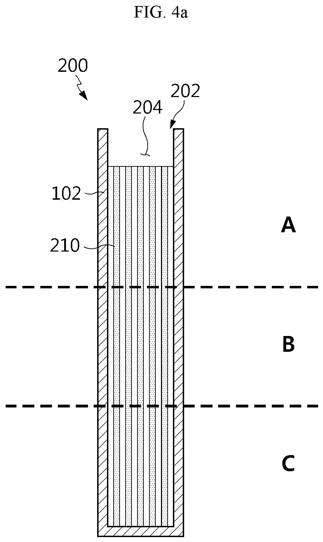

Referring to FIG. 4a, an embodiment of a zone, where the thickness of the battery 200 is determined, is shown. According to an embodiment, the thickness, T1, of the battery 200 may be determined before the electrolyte is injected into the housing 102. According to an embodiment, the battery 200 may include zone A, zone B and zone C, and the thickness of the battery 200 may be determined at zone A, zone B and/or zone C, individually or in combination. In this embodiment, three zones are illustrated, but the number of zones for determination may be changed. According to an embodiment of the present disclosure, the thickness may be determined in at least one specific point in the zones.

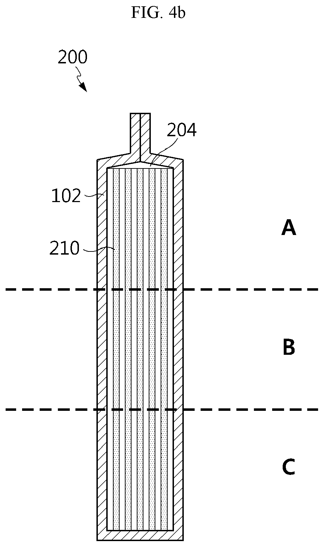

FIG. 4b illustrates an embodiment of a zone, where the thickness of the battery 200 is determined, is shown. According to an embodiment, the thickness, T2, of the battery 200 may be determined after the electrolyte is injected into the housing 102. According to an embodiment, the battery 200 may include zone A, zone B and zone C, and the thickness of the battery 200 may be determined at zone A, zone B and/or zone C, individually or in combination. In this embodiment, three zones are illustrated, but the number of zones for determination may be changed. According to an embodiment of the present disclosure, the thickness may be determined in at least one specific point in the zones.

As shown in FIGS. 3 to 4b, the battery 200 having a swelling factor within a range of $0 \leq SF < 10$ may be obtained by the system 300 for manufacturing a battery according to the present disclosure. Such a range of SF may suggest that the battery 200 shows minimized or no swelling, after an electrolyte is injected to the battery. As described above, when the electrolyte is injected to the housing of the battery 200, the vacant space 204 in the housing is filled with the electrolyte. Therefore, any optional change in the thickness of the battery 200 after the electrolyte injection may suggest that the housing is not evenly or uniformly wetted with the electrolyte. Accordingly, a swelling factor of larger than 0 may suggest that the pores of the electrode assembly and the vacant space in the battery 200 are not completely filled with the electrolyte. When the SF value is 10 or more, an excessive amount of electrolyte with which the pores in the electrode are not wetted is still present. Meanwhile, since the thickness of the battery is not reduced substantially, the condition of SF < 0 hardly occurs after the electrolyte injection. When the pores of the electrode are filled completely and uniformly with the electrolyte and the dead space of the battery 200 is sufficiently filled with an excessive amount of electrolyte (amount of electrolyte larger than the pore volume of the electrode assembly), the swelling factor substantially satisfies the condition of SF = 0. Meanwhile, when the swelling factor does not exceed 10, a change in thickness is not substantially large. Therefore, according to the present disclosure, a swelling factor (SF) equal to or higher than 0 and less than 10 is regarded as suggesting the electrode assembly uniformly filled with the electrolyte. According to a particular embodiment of the present disclosure, the swelling factor of the battery 200 may satisfy the condition of $0 \leq SF < 10$, $0 \leq SF \leq 7$, $0 \leq SF \leq 5$, $0 \leq SF \leq 3$, $0 \leq SF \leq 2$, or $0 \leq SF \leq 1$, preferably $SF \leq 5$, and most preferably SF = 0.

Meanwhile, the electrolyte, remaining after it is injected to a pouch battery and the pores of the electrode are totally filled therewith, is packed in the vacant space 204 in the pouch. The vacant space is a space normally present in the pouch, and the electrolyte remaining after the pores of the electrode are filled therewith may be introduced to the vacant space. Therefore, when the electrolyte is injected in an amount corresponding to the volume of the pores in the electrode assembly, the electrolyte is not totally introduced into the electrode assembly in some cases but remains outside of the electrode assembly. However, since such remaining electrolyte is packed in the vacant space 204, SF may have a value of less than 10, 7 or less, or 5 or less, preferably a value of close to 0.

Therefore, when the positive electrode is designed to have a low porosity and high density, particularly, even when the positive electrode of a lithium-sulfur battery has a high density and low porosity, it is possible to operate and drive the battery with improved performance even by using a smaller amount of electrolyte as compared to the conventional Li-S batteries.

The lithium secondary battery according to the present disclosure includes a high-density electrode and shows a low E/S ratio, and thus a high-capacity lithium secondary may be realized through the uniform wetting with an electrolyte.

Herein, the lithium secondary battery has the above-defined range of E/S ratio, and the weight of electrolyte is a predetermined value or less based on the weight of sulfur contained as a positive electrode active material.

According to the present disclosure, the lithium secondary battery uses a high-density positive electrode and includes an electrode assembly including electrolyte introduced uniformly thereto and having a uniform thickness, and thus can exhibit high capacity. According to an embodiment of the present disclosure, the lithium secondary battery may have a capacity of 950-1300 mAh/$g_s$. Particularly, the capacity of the lithium secondary battery may be 950 mAh/$g_s$ or more, 1000 mAh/$g_s$ or more, or 1050 mAh/$g_s$ or more. In addition, the capacity of the lithium secondary battery may be 1300 mAh/$g_s$ or less, 1250 mAh/$g_s$ or less, or 1200 mAh/$g_s$ or less. The battery capacity is based on the capacity per unit weight (g) of positive electrode active material, i.e. sulfur.

Meanwhile, according to the present disclosure, the electrolyte may include an organic solvent and a lithium salt. In addition, the electrolyte may be a liquid electrolyte.

The organic solvent functions as a medium through which ions participating in the electrochemical reactions of a battery are migrated. Any organic solvent that may be used generally for an electrolyte of a lithium secondary battery may be used with no particular limitation. For example, the electrolyte may include ether, ester, amide, linear carbonate, cyclic carbonate, or the like, alone or in combination of two or more of them. Typically, the electrolyte may include an ether-based compound.

The ether-based compound may include a non-cyclic ether and a cyclic ether.

Particular examples of the non-cyclic ether may include at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethyl ether, triethylene glycol dimethylether, triethylene glycol diethyl ether, triethylene glycol methylethyl ether, tetraethylene glycol dimethyl ether, tetraethylene glycol diethyl ether, tetraethylene glycol methyl ethyl ether, polyethylene glycol dimethyl ether, polyethylene glycol diethyl ether, and polyethylene glycol methyl ethyl ether.

Non-limiting examples of the cyclic ether may include at least one selected from the group consisting of dioxolane, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxybenzene, 1,3-dimethoxybenzene, 1,4-dimethoxybenzene and isosorbide dimethyl ether, furan, 2-methylfuran, 3-methylfuran, 2-ethylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ehtylthiophene, 2-propylthiophene, 2-butylthiophene, 2,3-dimethylthiophene, 2,4-dimethylthiophene, and 2,5-dimethylthiophene.

Non-limiting examples of the ester of the organic solvent may include any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone, or a mixture of two or more of them.

Non-limiting examples of the linear carbonate compound may include any one selected from the group consisting of dimethyl carbonate (DMC), diethyl carbonate (DEC), dipropyl carbonate, ethyl methyl carbonate (EMC), methyl propyl carbonate and ethyl propyl carbonate, or a mixture of two or more of them.

Non-limiting examples of the cyclic carbonate compound may include ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate and halides thereof, or a mixture of two or more of them. Particular examples of such halides may include fluoroethylene carbonate (FEC), or the like, but are not limited thereto.

The lithium salt is a compound capable of providing lithium ions in the electrolyte. Particular examples of the lithium salt may include $LiPF_6$, $LiClO_4$, $LiAsF_6$, $LiBF_4$, $LiSbF_6$, $LiAlO_4$, $LiAlCl_4$, $LiCF_3CO_2$, $LiCF_3SO_3$, $LiC_4F_9SO_3$, $LiN(C_2F_5SO_3)_2$, $LiCH_3SO_3$, $LiN(C_2F_5SO_2)_2$, $LiN(CF_3SO_2)_2$, $LiC_4BO_8$, $LiCl$, $LiBr$, $LiB_{10}Cl_{10}$, $LiI$, $LiB(C_2O_4)_2$, or the like. According to the present disclosure, the lithium salt preferably includes Li-TFSI with a view to increasing the applicability of sulfur and realizing a high-capacity and high-voltage battery. More preferably, the lithium salt may include $LiN(CF_3SO_2)_2$ (Li-TFSI) in an amount of 80 wt% or more, 90 wt% or more, or 100%, based on 100 wt% of the total weight of the lithium salt.

The lithium salt has a concentration of 0.1-2.0 M, preferably 0.5-1 M, and more preferably 0.5-0.75 M. When the lithium salt concentration falls within the above-defined range, the electrolyte has suitable conductivity and viscosity, and thus can realize excellent electrolyte performance and allows effective migration of lithium ions. When the lithium salt concentration is less than the above-defined range, it is difficult to ensure ion conductivity suitable for battery operation. When the lithium salt concentration is higher than the above-defined range, the electrolyte has increased viscosity to cause degradation of lithium ion migration or an increase in decomposition of the lithium salt itself, resulting in degradation of the battery performance.

Besides the above-mentioned ingredients forming the electrolyte, the electrolyte may further include additives in order to improve the life characteristics of the battery, to inhibit a decrease in the capacity of the battery, to improve the discharge capacity of the battery, or the like. For example, the additives may include a nitrate compound, a nitrite compound, a haloalkylene carbonate-based compound, such as difluoroethylene carbonate, pyridine, triethyl phosphite, triethanolamine, cyclic ether, ethylene diamine, n-glyme, triamide hexamethylphosphate, nitrobenzene derivative, sulfur, quinone imine dye, N-substituted oxazolidinone, N,N-substituted imidazolidine, ethylene glycol dialkyl ether, ammonium salt, pyrrole, 2-methoxyethanol or aluminum chloride, alone or in combination. The additives may be present in an amount of 0.1-10 wt%, preferably 0.1-5 wt%, based on the total weight of the electrolyte.

According to an embodiment of the present disclosure, the electrolyte may include, as an additive, a nitrate compound and/or a nitrite compound. Such a nitrate compound/nitrite compound has the effects of forming a stable coating film at a lithium metal electrode as a negative electrode and improving charge/discharge efficiency. Non-limiting examples of the nitrate or nitrite compound may include at least one selected from the group consisting of: inorganic nitrate or nitrite compounds, such as lithium nitrate ($LiNO_3$), potassium nitrate ($KNO_3$), cesium nitrate ($CsNO_3$), barium nitrate ($Ba(NO_3)_2$), ammonium nitrate ($NH_4NO_3$), lithium nitrite ($LiNO_2$), potassium nitrite ($KNO_2$), cesium nitrite ($CsNO_2$), ammonium nitrite ($NH_4NO_2$), or the like; organic nitrate or nitrite compounds, such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite, or the like; organic nitro compounds, such as nitromethane, nitropropane, nitrobutane, nitrobenzene, dinitrobenzene, nitropyridine, dinitropyridine, nitrotoluene, dinitrotoluene, or the like; and combinations thereof. According to a preferred embodiment of the present disclosure, the additives may include lithium nitrate.

Meanwhile, FIG. 5 is a flow chart illustrating the method 500 for manufacturing a lithium secondary battery according to an embodiment of the present disclosure. The battery may be manufactured by using the above-described system 300 for manufacturing a battery.

First, a first electrode, a separator and a second electrode are stacked to form an electrode assembly (step 502). According to an embodiment, the first electrode may be a positive electrode, and the second electrode may be a negative electrode. Next, the electrode assembly is inserted to a housing (step 504). According to an embodiment of the present disclosure, the housing may be a pouch. The housing having the electrode assembly inserted thereto is disposed in a jig. According to an embodiment of the present disclosure, the thickness, T1, of the battery may be determined before or after the battery is disposed in the jig. Then, pressure may be applied to the surface of the battery inserted to the housing (step 506). The pressure may be controlled to provide a desired swelling factor (SF). According to an embodiment of the present disclosure, the level of pressure may be controlled to meet the above-defined condition at a pressure of 100 atm or less. According to an embodiment of the present disclosure, the battery may have a swelling factor (SF) equal to or higher than 0 and less than 10. After that, a predetermined amount of electrolyte is injected into the housing (step 508). Meanwhile, as described above, while the electrolyte is injected, the thickness of the battery is determined and the level of pressure applied to the battery may be controlled suitably based on the thickness. The pressure may be controlled based on the SF value. When the electrolyte injection is completed, the battery is sealed (step 510). Meanwhile, the swelling factor of the battery may be determined before the battery is sealed. According to another embodiment, the thickness, T2, may be determined before or after releasing the pressure applied to the battery. The swelling factor (SF) is calculated according to the above Formula 1. According to an embodiment of the present disclosure, the swelling factor may be calculated by determining T2 before after releasing the pressure, and may have a value equal to or higher than 0 and less than 10, preferably 7 or less, more preferably 5 or less, and most preferably 3 or less.

In addition, according to an embodiment of the present disclosure, the thickness, T1 and T2, may be determined at two optional points after releasing the pressure applied to the battery, and then SF may be calculated from T1 and T2.

MODE FOR DISCLOSURE

Exemplary embodiments are presented to aid understanding of the present disclosure. However, the following embodiments are merely illustrative of the present disclosure, and it will be apparent to those skilled in the art that various changes and modifications can be made within the scope of the present disclosure. Various changes and modifications are included in the appended claims.

**Example 1**

**(1) Manufacture of Electrode Assembly**

A sulfur-carbon composite was prepared as a positive electrode active material. Sulfur (S) was mixed with carbon (e.g. carbon nanotubes, CNT) homogeneously in a solid state (weight ratio S:CNT = 75:25), and then the resultant mixture was heat treated at 155°C for 35 minutes to obtain a sulfur-carbon composite. The positive electrode active material (sulfur-carbon composite), CNT (specific surface area 300 $m^2$/g, particle diameter 20 $\mu$m) and styrene butadiene rubber (SBR) were mixed at a weight ratio of 90:5:5 by using a mixer to prepare a composition for forming a positive electrode active material layer. The composition was mixed with ethanol as an organic solvent to prepare a slurry for forming a positive electrode active material layer, and the slurry was coated on an Al current collector, followed by drying and pressing, to provide a positive electrode.

In addition, a lithium metal foil was prepared as a negative electrode. The positive electrode and negative electrode were disposed to face each other, and a polyethylene separator was interposed between both electrodes to obtain an electrode assembly.

**(2) Pressurization**

A pressurizing jig having an upper plate and a lower plate disposed in parallel with each other was prepared, and a pouch having the electrode assembly received therein was disposed in the jig. Then, the pouch was pressurized under about 5 atm so that the pouch cell might retain a constant thickness.

**(3) Injection of Electrolyte**

An electrolyte was prepared by introducing 1 M LiTFSI to a mixed organic solvent containing tetraethylene glycol dimethyl ether (TEGDME)/dioxolane (DOL)/dimethoxyethane (DME) (volume ratio 1:1:1). Meanwhile, LiNO$_3$ was added at a weight ratio of 1/10 based on LiTFSI. After injecting the electrolyte, depressurization was carried out for about 3 seconds to maintain a vacuum state. Then, the jig was removed from the pouch cell after the electrolyte was injected completely.

**Comparative Example 1**

A pouch cell-type L-S secondary battery was obtained in the same manner as Example 1, except that no pressurization step was carried out before and after the electrolyte was injected.

**Test Example 1**

Each of the Li-S secondary batteries according to Example 1 and Comparative Example 1 was tested in terms of its performance.

**(1) Initial Discharge Capacity and Battery Life**

Each pouch cell-type Li-S secondary battery was charged/discharged repeatedly at room temperature to perform a charge/discharge test. After the first discharge at 0.1 C, the same charge/discharge cycles were repeated twice more, three charge/discharge cycles were repeated at 0.2 C, and charge/discharge cycles were repeated continuously under the condition of 0.3 C/0.5 C. Upon the initial discharge, a capacity-voltage graph was plotted to evaluate the initial discharge capacity, and quick charging performance was evaluated from a graph illustrating a change in capacity depending on cycle repetition number.

**(2) 0.1 C Nominal Voltage (V)**

Each Li-S secondary battery was determined in terms of 0.1 C nominal voltage by using a charger, PNESOLUTION.

**(3) Electrolyte/Sulfur ratio**

The weight of sulfur was measured, and the weight ratio of electrolyte/sulfur was calculated.

**(4) Energy Density (Wh/kg)**

The energy density was calculated by dividing the pouch cell capacity (Wh) by the weight of the pouch cell (kg).

**(5) Determination of Swelling Factor**

The swelling factor was calculated according to the following Formula 1:

[Formula 1]

$$SF = (\text{Thickness of pouch cell after electrolyte injection} - \text{Thickness of pouch cell before electrolyte injection}) / (\text{Thickness of pouch cell before electrolyte injection}) \times 100,$$

[Table 1]

|  | Initial discharge capacity (mAh/g·s) | Battery life (cycle@Retenti on 90%) | 0.1 C Nominal voltage (V) | Electrolyte /sulfur ratio (E/S) | Energy density (Wh/kg) | SF |
|---|---|---|---|---|---|---|
| Comp. Ex. 1 | 910 | 4 | 2.045 | 1.5 | 357 | 10 |
| Ex. 1 | 1030 | 30 | 2.117 | 1.5 | 436 | 0 |

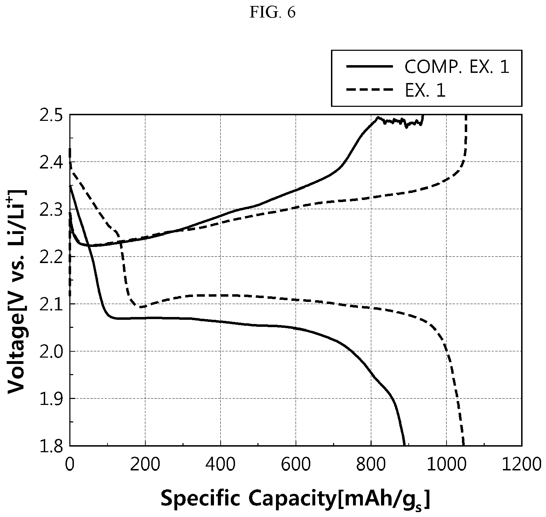

FIG. 6 is a graph 600 illustrating the results of comparison of the initial discharge capacity between Example 1 according to an embodiment of the present disclosure and Comparative Example 1. As shown in Table 1 and graph 600, the battery according to Example 1 shows a higher initial discharge capacity as compared to the battery according to Comparative Example 1.

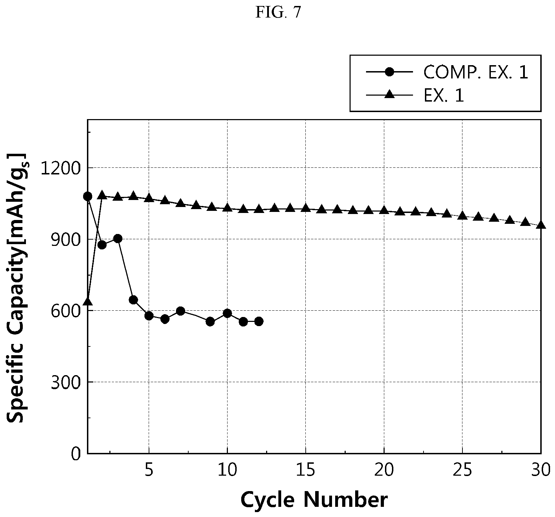

FIG. 7 is a graph 700 illustrating the results of comparison of discharge cycle characteristics between Example 1 according to an embodiment of the present disclosure and Comparative Example 1. As shown in Table 1 and graph 700, the battery according to Example 1 shows higher life characteristics as compared to the battery according to Comparative Example 1.

In addition, Example 1 shows a higher 0.1 C discharge nominal voltage and energy density as compared to Comparative Example 1. Although Example 1 and Comparative Example 1 show the same electrolyte/sulfur ratio, Example 1 shows better results as compared to Comparative Example 1 in terms of all of the remaining physical properties. This is because the electrolyte is injected uniformly through the pressurization step according to Example 1.

[Description of Drawing Numerals]

| 100: | Battery | 102: | Housing | 104: | First electrode tab |
|---|---|---|---|---|---|
| 106: | Second electrode tab | 104a and 106a: | Insulating protective tape | | |
| 200: | Battery | 202: | Opening (Electrolyte injection port) | | |
| 210: | Electrode assembly | 204: | Vacant space (Dead space) | | |
| 210: | Electrode assembly | 212: | Positive Electrode | 214: | Separator |
| 216: | Negative electrode | 218: | Last layer | | |
| 300: | System | 304: | Electrolyte dispensing unit | | |
| 302: | Controller | 306: | Jig | | |
| 310: | Second direction | 308: | First direction | | |

**Claims**

1. A lithium-sulfur battery containing a sulfur-based compound as a positive electrode active material, wherein the lithium-sulfur battery comprises:

   an electrode assembly including a positive electrode, a negative electrode and a separator interposed between the positive electrode and the negative electrode;
   a pouch configured to receive the electrode assembly; and
   an electrolyte,
   and has a swelling factor (SF) equal to or higher than 0 and less than 10 as defined by the following Formula 1:

   [Formula 1]

   $$SF = (T2 - T1) / (T1) \times 100,$$

   wherein T1 is a first thickness of the lithium-sulfur battery, and T2 is a second thickness of the lithium-sulfur battery.

2. The lithium-sulfur battery according to claim 1, wherein the first thickness is the thickness of the lithium-sulfur battery before the electrolyte is injected to the pouch, and the second thickness is the thickness of the lithium-sulfur battery after the electrolyte is injected to the pouch.

3. The lithium-sulfur battery according to claim 1, wherein both the first thickness and the second thickness are determined after the electrolyte is injected, each of the first thickness and the second thickness is determined at an optional point of the battery, and the point of determining the first thickness is different from the point of determining the second thickness.

4. The lithium-sulfur battery according to claim 1, wherein the positive electrode comprises a sulfur-carbon composite containing a carbonaceous material and sulfur, as a positive electrode active material.

5. The lithium-sulfur battery according to claim 4, wherein the sulfur-carbon composite comprises sulfur in an amount of 70 wt% or more based on the total weight thereof.

6. The lithium-sulfur battery according to claim 1, wherein the positive electrode active material layer of the positive electrode has a density of 0.5-4.5 g/cc.

7. The lithium-sulfur battery according to claim 1, wherein the negative electrode comprises lithium metal as a negative electrode active material.

8. The lithium-sulfur battery according to claim 1, which shows a ratio (E/S) of the weight of electrolyte based on the weight of sulfur of 2.7 or less.

9. The lithium-sulfur battery according to claim 1, wherein the positive electrode active material layer of the positive electrode has a porosity of 35-75 vol%.

10. The lithium-sulfur battery according to claim 1, which has a capacity of 950-1300 mAh/gs.

11. An electric vehicle including the lithium-sulfur battery as defined in claim 1 as a power source.

12. A method for manufacturing a lithium-sulfur battery, comprising the steps of:

    forming an electrode assembly by stacking a positive electrode, a separator and a negative electrode;
    allowing the electrode assembly to be received in a pouch;
    applying a predetermine level of pressure to the pouch in which the electrode assembly is received;
    injecting a predetermined amount of electrolyte to the pouch, while maintaining the predetermined level of pressure; and
    sealing the pouch,

wherein the lithium-sulfur battery has a swelling factor (SF) equal to or higher than 0 and less than 10 as defined by the following Formula 1:

$$[\text{Formula 1}]$$

$$SF = (T2 - T1) / (T1) \times 100,$$

wherein T1 is a first thickness of the lithium-sulfur battery, and T2 is a second thickness of the lithium-sulfur battery.

13. The method for manufacturing a lithium-sulfur battery according to claim 12, which further comprises a step of determining a swelling factor before the pouch is sealed.

14. The method for manufacturing a lithium-sulfur battery according to claim 13, wherein the step of determining a swelling factor comprises the steps of: determining the first thickness of the lithium-sulfur battery before the electrolyte is injected to the pouch; and determining the second thickness of the lithium-sulfur battery after the electrolyte is injected to the pouch.

15. The method for manufacturing a lithium-sulfur battery according to claim 12, which further comprises a step of determining a swelling factor after the pouch is sealed.

16. The method for manufacturing a lithium-sulfur battery according to claim 15, wherein the step of determining a swelling factor comprises the steps of: determining the first thickness of the battery at a first zone of the lithium-sulfur battery; and determining the second thickness of the battery at a second zone of the lithium-sulfur battery.

17. The method for manufacturing a lithium-sulfur battery according to claim 12, wherein the pressure is 100 atm or less.

18. A system for manufacturing a lithium-sulfur battery, comprising:

a controller;
a jig linked to the controller, comprising a first flat plate and a second flat plate, and configured to apply pressure between the first flat plate and the second flat plate to a level based on the swelling factor of the lithium-sulfur battery; and
an electrolyte injecting device linked to the controller and configured to inject an electrolyte to the pouch of the lithium-sulfur battery,
wherein the swelling factor (SF) is determined by the following Formula 1:

$$[\text{Formula 1}]$$

$$SF = (T2 - T1) / (T1) \times 100,$$

wherein T1 is a first thickness of the lithium-sulfur battery, and T2 is a second thickness of the lithium-sulfur battery.

19. The system for manufacturing a lithium-sulfur battery according to claim 18, which further comprises a controller configured to control the pressure applied to the lithium-sulfur battery based on the swelling factor.

FIG. 1

FIG. 2a

FIG. 2b

FIG. 3

FIG. 4a

FIG. 4b

FIG. 5

```
                                                        ┌─502
┌─────────────────────────────────────────────────────┐
│           STACKING FIRST ELECTRODE, SEPARATOR AND     │
│        SECOND ELECTRODE TO OBTAIN ELECTRODE ASSEMBLY  │
└─────────────────────────────────────────────────────┘
                          │
                          ▼                             ┌─504
┌─────────────────────────────────────────────────────┐
│              INTRODUCING ELECTRODE ASSEMBLY           │
│                  INTO BATTERY CASING                   │
└─────────────────────────────────────────────────────┘
                          │
                          ▼                             ┌─506
┌─────────────────────────────────────────────────────┐
│           APPLYING PRESSURE TO SURFACE OF BATTERY     │
│        CASING BASED ON SWELLING FACTOR OF BATTERY     │
└─────────────────────────────────────────────────────┘
                          │
                          ▼                             ┌─508
┌─────────────────────────────────────────────────────┐
│            INJECTING PREDETERMINED AMOUNT OF          │
│              ELECTROLYTE INTO BATTERY CASING          │
└─────────────────────────────────────────────────────┘
                          │
                          ▼                             ┌─510
┌─────────────────────────────────────────────────────┐
│                 SEALING BATTERY CASING                │
└─────────────────────────────────────────────────────┘
```

FIG. 6

FIG. 7

FIG. 8

(a)                    (b)

| | | |
|---|---|---|
| **INTERNATIONAL SEARCH REPORT** | International application No. | |
| | **PCT/KR2022/015436** | |

**A. CLASSIFICATION OF SUBJECT MATTER**

**H01M 10/058**(2010.01)i; **H01M 4/38**(2006.01)i; **H01M 10/052**(2010.01)i; **H01M 50/105**(2021.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 10/058(2010.01); H01M 10/052(2010.01); H01M 10/0566(2010.01); H01M 10/0587(2010.01); H01M 10/40(2006.01); H01M 2/02(2006.01); H01M 4/13(2010.01); H01M 50/10(2021.01); H01M 50/30(2021.01); H01M 50/60(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 황 전지 (lithium sulfur battery), 두께 (thickness), 가압 (press), 전해액 주입 (electrolyte injection)

**C. DOCUMENTS CONSIDERED TO BE RELEVANT**

| Category* | Citation of document, with indication, where appropriate, of the relevant passages | Relevant to claim No. |
|---|---|---|
| X | KR 10-2019-0052285 A (LG CHEM, LTD.) 16 May 2019 (2019-05-16)<br>See abstract; claims 1 and 8; and paragraphs [0025]-[0037], [0084], [0085], [0092] and [0094]. | 1-11 |
| Y | | 12-17 |
| A | | 18,19 |
| Y | JP 2003-272710 A (OSAKA GAS CO., LTD.) 26 September 2003 (2003-09-26)<br>See abstract; claim 1; paragraphs [0012], [0023]-[0030] and [0039]; and figure 5A. | 12-17 |
| A | KR 10-2020-0129546 A (LG CHEM, LTD.) 18 November 2020 (2020-11-18)<br>See entire document. | 1-19 |
| A | KR 10-2256485 B1 (LG ENERGY SOLUTION, LTD.) 27 May 2021 (2021-05-27)<br>See entire document. | 1-19 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 January 2023** | **27 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/015436** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2014-082157 A (HITACHI VEHICLE ENERGY LTD.) 08 May 2014 (2014-05-08)<br>See entire document. | 1-19 |

Form PCT/ISA/210 (second sheet) (July 2022)

International application No.

**PCT/KR2022/015436**

| Patent document cited in search report | | | Publication date (day/month/year) | Patent family member(s) | | | Publication date (day/month/year) |
|---|---|---|---|---|---|---|---|
| KR | 10-2019-0052285 | A | 16 May 2019 | CN | 111213259 | A | 29 May 2020 |
| | | | | EP | 3664194 | A1 | 10 June 2020 |
| | | | | JP | 2020-533746 | A | 19 November 2020 |
| | | | | JP | 6959439 | B2 | 02 November 2021 |
| | | | | KR | 10-2320327 | B1 | 01 November 2021 |
| | | | | US | 11322811 | B2 | 03 May 2022 |
| | | | | US | 2020-0274134 | A1 | 27 August 2020 |
| | | | | WO | 2019-093735 | A1 | 16 May 2019 |
| JP | 2003-272710 | A | 26 September 2003 | JP | 4092543 | B2 | 28 May 2008 |
| KR | 10-2020-0129546 | A | 18 November 2020 | | None | | |
| KR | 10-2256485 | B1 | 27 May 2021 | KR | 10-2018-0137346 | A | 27 December 2018 |
| JP | 2014-082157 | A | 08 May 2014 | JP | 5923431 | B2 | 24 May 2016 |

Form PCT/ISA/210 (patent family annex) (July 2022)

**REFERENCES CITED IN THE DESCRIPTION**

**Patent documents cited in the description**

- KR 1020210134880